# FASCICULE DE BREVET EUROPEEN

(11) **EP 2 646 300 B1**
(45) Date de publication et mention de la délivrance du brevet: **26.04.2017**
(21) Numéro de dépôt: 11779675.5
(22) Date de dépôt: 09.11.2011
(51) Int. Cl.: B60T 8/44, B60T 8/1755, B60T 13/66, B60T 13/68, B60T 13/74, B60T 15/36, B60T 13/128, B60T 13/138, B60T 8/17

(54) **ENSEMBLE HYDRAULIQUE DE FREINAGE D'UN VÉHICULE ET RÉDUCTION DE LA COURSE MORTE DUDIT VÉHICULE**
HYDRAULIKAGGREGAT ZUR BREMSUNG EINES FAHRZEUGS UND ZUR VERMINDERUNG DES LEERWEGES DES FAHRZEUGS
HYDRAULIC ASSEMBLY FOR BRAKING A VEHICLE AND REDUCING THE FREE TRAVEL OF SAID VEHICLE

(30) Priorité: 01.12.2010 FR 1004704
(43) Date de publication de la demande: 09.10.2013
(73) Titulaire: Robert Bosch GmbH, 70442 Stuttgart (DE)
(72) Inventeur: CAGNAC, Bastien, 60660 Cramoisy (FR); ANDERSON, Chris, 75002 Paris (FR)
(86) Numéro de dépôt international: PCT/EP2011/069744
(87) Numéro de publication internationale: WO 2012/072390

(56) Documents cités:
- EP-A1- 0 225 212
- EP-A2- 2 223 833
- DE-A1- 3 502 474
- DE-A1- 3 821 225
- US-A- 5 123 712
- US-A1- 2003 030 321
- US-A1- 2003 168 909
- US-B1- 6 315 371

## Description

L'invention concerne un ensemble hydraulique de freinage d'un véhicule dont des exemples sont décrits dans DE 3502474, WO 2010/006998 A1, US 5123712 et EP 0225212 . L'invention a pour but de réduire une course morte du véhicule au moment du freinage.

L'invention concerne le domaine de l'automobile mais pourrait concerner d'autres domaines.

On connaît des ensembles hydrauliques de freinage comportant un servomoteur d'assistance de freinage, un maître cylindre et au moins un circuit hydraulique de freinage.

Le servomoteur comporte une tige de commande, un plongeur, un piston palpeur, une tige de poussée et un alésage formé au travers d'un corps du servomoteur. Après appui sur la pédale de frein, la tige de commande est déplacée et entraîne le coulissement du plongeur au travers du piston palpeur qui est aussi amené à coulisser dans l'alésage du servomoteur et en direction du maître cylindre.

Le maître cylindre comporte une chambre primaire et un piston primaire. La tige de poussée est reliée au piston primaire. La chambre primaire est alimentée en fluide hydraulique par un premier réservoir de fluide hydraulique via un premier conduit. Ce premier conduit est formé au travers d'un corps du maître cylindre.

Le circuit hydraulique de freinage est branché par une extrémité en sortie de la chambre primaire et est relié par une extrémité opposée à au moins un dispositif de freinage du véhicule. Le dispositif de freinage peut être du type frein à disque ou frein à tambour et est monté sur une roue donnée du véhicule. Le dispositif de freinage comporte une garniture de frein et une surface de frottement. La garniture de frein peut être montée fixe par rapport à la roue tandis que la surface de frottement est montée liée en rotation à la roue. La garniture de frein est destinée à être appliquée contre la surface de frottement afin d'entraîner le ralentissement de la rotation, voir l'arrêt en rotation de la roue du véhicule sur laquelle est monté ce dispositif de freinage.

Le fluide hydraulique remplissant la chambre primaire, rempli également les conduits du circuit hydraulique de freinage jusqu'au dispositif de freinage. Au repos, ce fluide est à la pression atmosphérique.

Au moment où le conducteur appuie sur la pédale de frein, il se produit un rattrapage de jeux existants entre la tige de commande et chacun des dispositifs de freinage avant qu'ait lieu le freinage du véhicule. Pour rattraper tout ces jeux, il est nécessaire que la pédale de frein soit enfoncée assez profondément dans le véhicule.

Pour que le conducteur ne soit pas obligé d'enfoncer sur une trop longue distance la pédale de frein, il est connu, entre autres, de mettre place une étape supplémentaire qui se produit au même moment où le conducteur appui sur la pédale de frein. Cette étape supplémentaire permet de diminuer la distance sur laquelle doit être enfoncée la pédale de frein afin d'obtenir le freinage proprement dit du véhicule.

Cette étape supplémentaire consiste en le remplissage en fluide hydraulique d'une chambre de poussée. Cette chambre de poussée est formée par le maître cylindre et est délimitée par le piston palpeur et l'alésage du maître cylindre. Un fluide hydraulique est envoyé dans la chambre de poussée par un deuxième conduit formé au travers du corps du maître cylindre. Le remplissage de cette chambre de poussée est déclenché dès que le conducteur appuie sur la pédale de frein.

Au repos, le fluide hydraulique contenu dans la chambre de poussée, dans la chambre primaire du maître cylindre et dans le circuit hydraulique de freinage est à la pression atmosphérique.

Au moment du freinage, la détection du déplacement de la pédale de frein entraîne le remplissage de la chambre de poussée en fluide hydraulique. Le volume de la chambre de poussée augmente au fur et à mesure qu'est enfoncée la pédale de frein en direction du maître cylindre. Le piston palpeur est alors entraîné en direction du maître cylindre du fait du déplacement de la tige de commande mais également du fait de la pression exercée par le fluide injecté dans la chambre de poussée sur le piston palpeur.

Le déplacement du piston palpeur en direction du maître cylindre entraîne donc un déplacement du piston primaire. Le piston primaire est entraîné de telle sorte que l'alimentation en fluide de la chambre primaire par le réservoir primaire est rompue. Il se produit alors une surpression dans la chambre primaire et également dans les conduits du circuit hydraulique de freinage. Il s'ensuit un rapprochement des garnitures de frein de leur surface de frottement, entraînant le freinage, voir l'arrêt du véhicule.

Ce remplissage de la chambre de poussée permet de faire déplacer le piston primaire sans que le conducteur ait besoin d'enfoncer trop profondément la pédale de frein.

Cette étape supplémentaire au moment du freinage faisant intervenir la chambre de poussée est une solution satisfaisante car le conducteur appuie sur la pédale de frein sans réaliser de course supplémentaire particulier.

Cependant, les constructeurs automobiles sont de plus en plus soumis à des contraintes d'ordres écologiques. Ces contraintes imposent de réduire la quantité de dégagement de carbone produit par les véhicules.

Pour réduire les dégagements de carbone produit par les véhicules, il est prévu d'agir au niveau du dispositif de freinage. Notamment, il est prévu d'écarter la garniture de frein de sa surface de frottement jusqu'à ce que plus aucun couple de frottement ne se forme entre la garniture de frein et la surface de frottement en position de repos. Par position de repos on entend position de la garniture de frein par rapport à sa surface de frottement, lorsque le véhicule n'est pas en phase de freinage.

Le problème posé par ce type de mesure, est que, au moment d'un freinage du véhicule, on augmente une durée de rattrapage de course morte du véhicule du fait que la distance entre une surface de contact d'une garniture de frein donnée et la surface de frottement a été augmentée. Or, l'augmentation de la durée de la course morte retarde le freinage d'une manière jugée inacceptable dans certains cas.

On pourrait modifier la section de l'alésage du servomoteur et modifier les dimensions de la tige de poussée pour augmenter le volume de la chambre de poussée. Mais cette solution est couteuse et nécessite une transformation importante du servomoteur.

En outre, il est impératif de répondre aux exigences de freinage en cas de défaillance d'assistance.

C'est l'un des buts de la présente invention que de proposer une solution qui ne nécessite pas une transformation importante du servomoteur.

C'est un autre but de la présente invention que de proposer une solution pour réduire la durée de cette course morte sans nuire à la contrainte liée à un écartement imposé de la garniture de frein de sa surface de frottement pour réduire l'émission de carbone.

Selon l'invention, il est prévu de créer une dérivation de la pression générée par le fluide hydraulique initialement envoyé vers la chambre de poussée pour l'envoyer directement dans la chambre primaire du maître cylindre.

Selon l'invention, il est prévu de monter en pression l'intérieur de la chambre primaire du maître cylindre en même temps que le remplissage de la chambre de poussée. Ainsi, en même temps que la pédale de frein est appuyée, il se produit d'abord un remplissage de la chambre primaire. Il se produit alors une augmentation de la pression à l'intérieur de la chambre primaire et des conduits du circuit hydraulique de freinage.

Pour ce faire, un troisième conduit est prévu. Ce troisième conduit peut s'étendre depuis le premier réservoir vers l'intérieur de la chambre primaire. Ou bien ce troisième conduit peut s'étendre depuis un deuxième réservoir vers l'intérieur de la chambre primaire. Le deuxième conduit peut s'étendre également depuis le premier réservoir ou depuis le deuxième réservoir.

Une fois que la pression à l'intérieur de la chambre primaire a atteint une pression seuil, le remplissage de la chambre de poussée peut être commandé.

Il s'ensuit le déplacement du piston plongeur et donc du piston primaire. Le déplacement du piston primaire peut alors entraîner le rapprochement immédiat des garnitures de frein de leur surface de frottement puisque les jeux sont déjà comblés.

Selon l'invention, la chambre primaire peut être alimentée par le même réservoir que celui qui alimente la chambre de poussée ou bien par un réservoir différent du premier.

Avantageusement, l'ensemble selon l'invention comporte un calculateur dont une entrée est connectée à au moins un, avantageusement, à l'ensemble du capteur tels que capteur de pression, capteur de course de la tige de commande et analogue. La sortie du calculateur est connectée aux moyens de commande de l'alimentation hydraulique du primaire tels que la pompe haute pression et des électrovannes hydrauliques. Le calculateur élabore une consigne d'alimentation et/ou au contraire d'évaluation du liquide de frein du maître-cylindre de préférence du cylindre primaire. Ainsi, sans avoir recours à un simulateur en avançant ou reculant le piston, on assure le découplage plus ou moins complet de la position de la pédale de frein par rapport à la pression régnant dans le maître-cylindre. Ainsi, on assure notamment la réduction de la course morte.

En outre, contrairement à la mise en oeuvre d'un simulateur de freinage, on évite la dégradation de performances en mode de défaillance en absence d'assistance de freinage.

L'invention a donc pour objet un ensemble hydraulique de freinage comportant
- un servomoteur d'assistance de freinage comprenant un corps et un piston palpeur, le piston palpeur coulissant dans un alésage formé au travers du corps et étant relié par une première extrémité à une pédale de frein, le piston palpeur délimitant avec l'alésage du corps une chambre de poussée,
- un maître cylindre comportant une chambre primaire et un piston primaire, la chambre primaire étant reliée intérieurement à un circuit hydraulique de freinage, le piston primaire étant relié à une deuxième extrémité du piston palpeur opposée à la première extrémité du piston palpeur,
- un premier réservoir de fluide hydraulique alimentant la chambre primaire via un premier conduit,
- un fluide hydraulique alimentant la chambre de poussée via un deuxième conduit et au moyen d'une pompe hydraulique, caractérisé en ce qu'il comporte
- un troisième conduit recevant du fluide hydraulique et débouchant dans la chambre primaire du maître cylindre, et
- la pompe hydraulique étant en relation avec le troisième conduit, le remplissage en fluide dans la chambre primaire via le troisième conduit étant commandé par un capteur qui active la pompe au moment d'un appui sur la pédale de frein et préalablement au remplissage de la chambre de poussée par le deuxième conduit.

L'invention permet d'empêcher une sensation d'avancement de la pédale de frein.

Il peut être prévu que c'est en fonction de la vitesse avec laquelle est déplacée la pédale de frein par rapport au piston palpeur que la dérivation est mise en place. Lorsque la vitesse de déplacement de la pédale de frein est rapide, c'est-à-dire lorsque le conducteur appui brutalement sur la pédale de frein pour freiner brusquement ou rapidement, la dérivation se met en place.

Lorsque la vitesse de déplacement de la pédale de frein correspond à vitesse de déplacement moyenne au moment d'un freinage, il peut être prévu que la dérivation ne soit pas mise en place.

Ou bien il peut être prévu que la dérivation se met en place quelque soit la vitesse avec laquelle est déplacée la pédale de frein au moment du freinage.

L'invention a aussi pour objet un procédé d'alimentation en fluide hydraulique d'un ensemble hydraulique de freinage précédemment décrit lors d'un moment de freinage du véhicule, ledit procédé comportant les étapes suivantes
- détection de l'appui sur une pédale de frein,
- remplissage de la chambre primaire du maître cylindre en fluide hydraulique via le troisième conduit, et simultanément fermeture du premier conduit.

Le premier remplissage dans la chambre primaire et le maintien en pression de la chambre primaire peuvent être réalisés dès que le véhicule est en marche, que le conducteur ait appuyé ou non sur la pédale de frein. Dès que le déplacement de la pédale de frein est détecté, la chambre de poussée se remplie.

L'invention concerne donc enfin un procédé d'alimentation en fluide hydraulique d'un ensemble hydraulique de freinage précédemment décrit lors d'un moment de freinage du véhicule, ledit procédé comportant les étapes suivantes
- mise en marche du véhicule,
- remplissage de la chambre primaire du maître cylindre en fluide hydraulique via le troisième conduit, et simultanément fermeture du premier conduit.

L'invention a également pour objet un tel ensemble caractérisé en ce que le troisième conduit naît à partir du deuxième conduit.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1: Une représentation schématique d'un ensemble hydraulique de freinage au repos, selon l'invention ;
- Figure 2: Une représentation schématique d'un ensemble hydraulique de freinage en début de déplacement d'une pédale de frein au moment d'un freinage du véhicule, selon l'invention ;
- Figure 3: Une représentation schématique d'un ensemble hydraulique de freinage en fin de déplacement de la pédale de frein au moment d'un freinage du véhicule, selon l'invention.

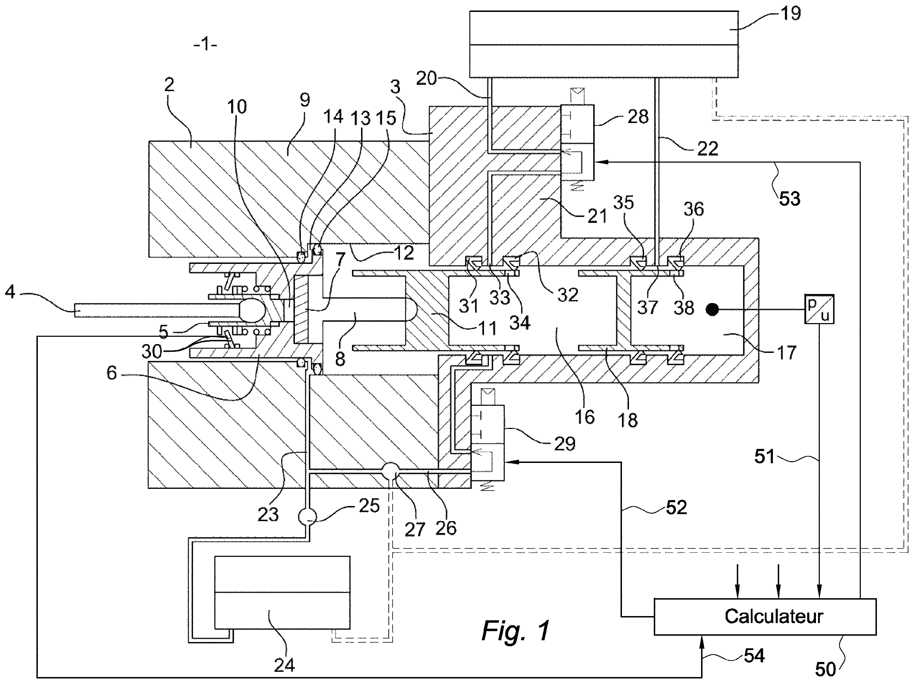

La figure 1 illustre un ensemble hydraulique de freinage 1 d'un véhicule en position de repos, selon l'invention. Par position de repos, on entend que le véhicule présente un ensemble hydraulique de freinage 1 qui n'est pas sollicité par une pédale de frein (non représentée), la pédale de frein étant dans une position où elle n'est pas actionnée, que le moteur soit
en marche ou non.

L'ensemble hydraulique de freinage 1 comporte un servomoteur d'assistance de freinage 2, un maître cylindre 3 et au moins un circuit hydraulique de freinage (non représenté). Le servomoteur 2 peut être un servomoteur à assistance pneumatique ou un servomoteur à assistance électrique. Ce servomoteur 2 comporte depuis la pédale de frein vers le maître cylindre 3, une tige de commande 4, un plongeur 5, un piston palpeur 6, un disque de réaction 7, une tige de poussée 8 et un corps 9. La tige de commande 4 est reliée par une extrémité à la pédale de frein et par une extrémité opposée au plongeur 5. Le piston palpeur 6 est relié par une extrémité au plongeur 5 et par une extrémité opposée à la tige de poussée 8. Le disque de réaction 7 est logé dans un renfoncement du piston palpeur 6, entre le plongeur 5 et la tige de poussée 8. Au repos, un espace 10 est formé entre le plongeur 5 et le disque de réaction 7. La tige de poussée 8 est reliée par une extrémité au piston palpeur 6 et au disque de réaction 7, et par une extrémité opposée à un piston primaire 11 du maître cylindre 3.

Le corps 9 forme un alésage 12 à l'intérieur duquel coulisse le piston palpeur 6. Le piston palpeur 6 et le corps 9 délimitent une chambre de poussée 13 étanche. L'étanchéité de la chambre de poussée 13 est assurée par un premier joint torique 14 et par un deuxième joint torique 15. Chacun de ces joints est placé en appui contre le corps 9 du servomoteur 2 et contre le piston palpeur 6.

La tige de commande 4 et le plongeur 5 sont solidaires l'un de l'autre et sont déplacés en translation le long d'une direction de déplacement de la pédale de frein en direction du maître cylindre 3. La tige de commande 4 et le plongeur 5 sont déplacés jusqu'à ce qu'il n'existe plus l'espace 10. Le piston palpeur 6, le disque de réaction 7 et la tige de poussée 8 sont solidaires les uns par rapport aux autres. Le piston primaire 11 est solidaire de la tige de poussée 8.

Le maître cylindre 3 peut être un maître cylindre tandem c'est à dire un maître cylindre à deux chambres mais pourrait être un maître cylindre avec une seule chambre. Dans l'exemple illustré, il s'agit d'un maître cylindre tandem avec une chambre primaire 16 et une chambre secondaire 17. Un piston primaire 11 et un piston secondaire 18 coulissent à l'intérieur respectivement de la chambre primaire 16 et de la chambre secondaire 17.

Le piston palpeur 6, la tige de poussée 8, le piston primaire 11 et le piston secondaire 18 sont disposés coaxialement les uns par rapport aux autres.

La chambre primaire 16 est alimentée en fluide hydraulique par l'intermédiaire d'un premier réservoir 19 de fluide hydraulique via un premier conduit 20. Ce premier conduit 20 s'étend au travers d'un corps 21 du maître cylindre 3 depuis le premier réservoir 19 vers l'intérieur de la chambre primaire 16. La chambre secondaire 17 est alimentée en fluide hydraulique par l'intermédiaire du premier réservoir 19 via un deuxième conduit 22. Le deuxième conduit 22 s'étend au travers du corps 21 depuis le premier réservoir 19 vers l'intérieur de la chambre secondaire 17.

En sortie du maître cylindre 3, et plus particulièrement en sortie de la chambre primaire 16 et en sortie de la chambre secondaire 17, sont branchés respectivement un circuit hydraulique primaire de freinage (non représenté) et un circuit hydraulique secondaire de freinage (non représenté). Chacun de ces circuits hydrauliques de freinage relie intérieurement une chambre du maître cylindre à un premier dispositif de freinage et à un deuxième dispositif de freinage. Le premier dispositif de freinage est monté sur une première roue du véhicule et le deuxième dispositif de freinage est monté sur une deuxième roue du véhicule. La première roue et la deuxième roue peuvent être montées selon une diagonale ou bien selon un axe qui est perpendiculaire au trajet suivit par le véhicule. Comme précédemment décrit, chacun des dispositifs de freinage peut être du type frein à disque ou frein à tambour.

Au repos, le fluide présent dans la chambre primaire 16, dans la chambre secondaire 17, dans les conduits de chacun des circuits hydrauliques de freinage est à la pression atmosphérique.

La chambre de poussée 13 est susceptible d'être alimentée en fluide hydraulique via un troisième conduit 23. Dans l'exemple illustré, ce troisième conduit 23 est formé au travers du corps 9 du servomoteur 2 et s'étend depuis l'intérieur d'un deuxième réservoir 24 de fluide hydraulique vers l'intérieur de la chambre de poussée 13. Le deuxième réservoir 24 peut faire parti d'un groupe hydraulique externe, du type par exemple ESP (Electronic Stability Program). Ou bien, le deuxième réservoir 24 peut être interne c'est-à-dire faire partie du servomoteur.

Dans un exemple non illustré, ce troisième conduit 23 pourrait naître du premier réservoir 19.

Le fluide hydraulique est envoyé dans la chambre de poussée 13 via une première pompe hydraulique 25 qui est disposée sur le troisième conduit 23. Au repos, le fluide présent dans la chambre de poussée 13 est à la pression atmosphérique et son volume est au plus bas.

Selon l'invention, l'ensemble hydraulique de freinage 1 comporte un quatrième conduit 26 recevant du fluide et débouchant dans la chambre primaire 16 du maître cylindre. Ce quatrième conduit 26 permet d'alimenter la chambre primaire 16 préalablement à l'alimentation de la chambre de poussée 13.

Dans l'exemple illustré, ce quatrième conduit 26 naît à partir du troisième conduit 23, s'étend au travers du corps 9 du servomoteur et au travers du corps 21 du maître cylindre pour déboucher dans la chambre primaire 16.

Ce quatrième conduit 26 peut être formé par un conduit interne qui est, dans l'exemple préféré, formé au travers du corps 9 du servomoteur 2 et au travers du corps 21 du maître cylindre 3. Le quatrième conduit 26 est donc protégé d'éventuels chocs pouvant provenir de l'extérieur. Dans l'exemple illustré, ce quatrième conduit 26 prend naissance sur le troisième conduit 23. Le quatrième conduit 26 est formé plus précisément par une première portion et par une deuxième portion. La première portion s'étend à partir d'une extrémité du troisième conduit 23 tout en traversant le corps 9 du servomoteur 2 et le corps 21 du maître cylindre 3. La deuxième portion s'étend au travers du corps 21 du maître cylindre et débouche dans la chambre primaire 16 du maître cylindre 3.

Dans un autre exemple illustré en traits pointillés figure 1, ce quatrième conduit 26 pourrait être formé par un conduit naissant à partir du deuxième réservoir 24 et débouchant dans l'intérieur de la chambre primaire 16.

Dans un autre exemple illustré également en traits pointillés figure 1, ce quatrième conduit 26pourrait aussi naître à partir du premier réservoir 19 pour déboucher dans la chambre primaire 16.

Selon l'invention, c'est la chambre primaire 16 et le circuit hydraulique primaire de freinage qui sont mis en surpression préalablement au remplissage de la chambre de poussée 13 en fluide hydraulique. Ce remplissage préalable est possible car une deuxième pompe 27 de fluide hydraulique qui est activée. Une deuxième pompe 27 de fluide hydraulique est disposée sur le quatrième conduit 26.

En variante, l'ensemble selon l'invention, comporte une pompe hydraulique unique 25 ou 27.

Le fluide est alors envoyé dans la chambre primaire 16 jusqu'à le maître cylindre et le circuit hydraulique primaire de freinage soient gavés de fluide hydraulique jusque dans les conduits du circuit hydraulique de freinage. Ce remplissage s'effectue jusqu'à ce qu'une pression seuil soit obtenue à l'intérieur de la chambre primaire 16. Cette pression seuil correspond à une pression où le fluide comble tous les jeux existants dans la chambre primaire 16 et dans les conduits du circuit hydraulique primaire. Cette pression seuil correspond également à une force supérieure à la force exercée par un ressort de rappel situé entre la garniture de frein et sa surface de frottement, ledit ressort de rappel maintenant en position de repos la garniture de frein écartée de sa surface de frottement. Lorsque la pression seuil est atteinte, le ressort a été comprimé de telle sorte que la garniture de frein s'est rapprochée de sa surface de frottement sans la toucher.

Ensuite, le fluide peut être déversé dans la chambre de poussée 13. Le volume de la chambre de poussée 13 augmente alors au fur et à mesure qu'est enfoncé la pédale de frein.

La chambre secondaire 17 et les conduits du circuit hydraulique secondaire peuvent également être mis en surpression car le fluide présent dans la chambre primaire 16 peut exercer une pression sur le piston secondaire 18. La surpression dans la chambre secondaire 17 peut être légèrement plus faible que celle présente dans la chambre primaire 16.

L'ensemble hydraulique de freinage 1 comporte également une première vanne 28 disposée sur le premier conduit 20. Cette première vanne 28 permet d'empêcher le fluide provenant de la chambre primaire 16 de remonter en direction du premier réservoir 19 lorsque le remplissage de la chambre primaire 16 est commandé via le quatrième conduit 26. Cette première vanne 28 permet également d'autoriser une augmentation de la pression à l'intérieur de la chambre primaire 16 lorsque le fluide transitant au travers du quatrième conduit 26 est déversé dans la chambre primaire 16.

L'ouverture de la première vanne 28 peut s'effectuer dès la détection du mouvement de la pédale de frein ou bien dès que le véhicule est mis en marche.

Avantageusement, l'ensemble 1 comporte également une deuxième vanne 29 rendant possible la montée en pression pendant la phase de gavage. La deuxième vanne 29 permet de commander un volume de fluide hydraulique sensé retourner au travers du quatrième conduit 26 au moment du retour en position de repos de la pédale de frein. Cette deuxième vanne 29 empêche qu'un trop gros volume de fluide ne retourne au travers du quatrième conduit 26. Cette deuxième vanne 29 permet de répartir des volumes prédéterminés de fluide dans chacun des réservoirs de fluide. Cette deuxième vanne 29 est utile lorsque le quatrième conduit 26 naît à partir du deuxième réservoir 24. La deuxième vanne 29 est placée sur le quatrième conduit 26 et relie la première portion à la deuxième portion

Le servomoteur 2 comporte également un capteur 30 de déplacement de la pédale de frein. Ce capteur 30 alerte un calculateur central (non représenté). Le calculateur central récolte et traite les informations provenant de différents capteurs du véhicule. Le capteur 30 est stimulé dès la détection d'un déplacement de la pédale de frein. Le calculateur central agit alors sur la première vanne 28. Le calculateur central commande alors l'alimentation en fluide de la chambre primaire 16 via le deuxième réservoir 24 et via le quatrième conduit 26 en stimulant la première pompe 25 et/ou la deuxième pompe 27.

La première vanne 28 et la deuxième vanne 29 peuvent dans un exemple préféré être formées par une électrovanne, c'est-à-dire qu'elles sont commandées électriquement.

Selon un premier mode de réalisation de l'invention, en position de repos, figure 1, les deux vannes 28 et 29 sont ouvertes. Le volume de la chambre de poussée 13 est au plus bas. Le fluide présent dans la chambre primaire 16, dans la chambre secondaire 17, dans les conduits du circuit hydraulique primaire de freinage et dans les conduits du circuit hydraulique secondaire de freinage sont à la pression atmosphérique.

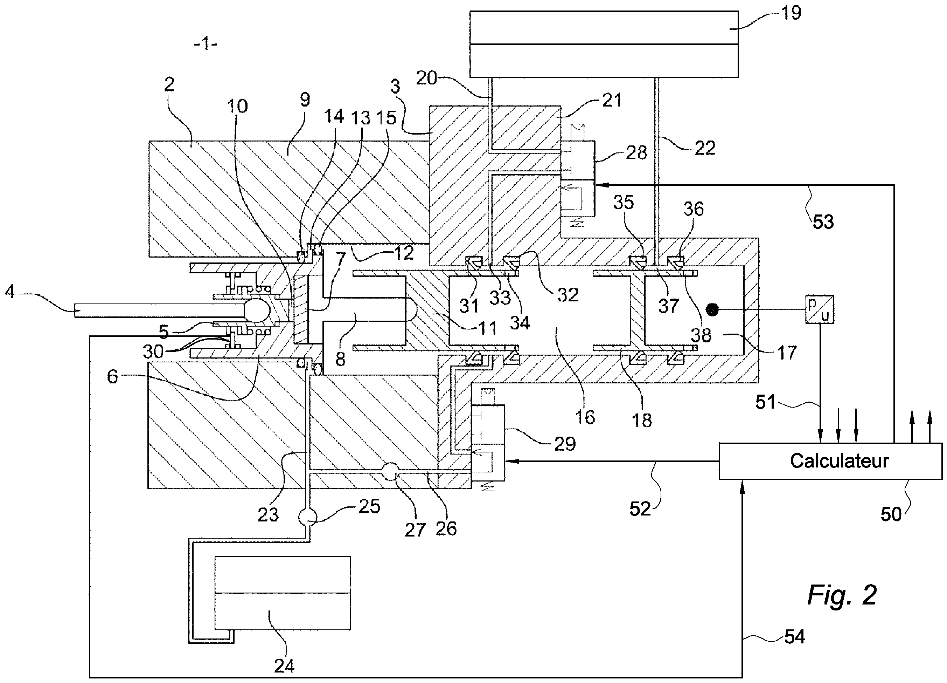

En position de début de freinage, figure 2, la première vanne 28 se ferme. Un ordre de fermeture peut être donné par le calculateur par exemple. Le fluide provenant du deuxième réservoir 24 s'écoule alors au travers du quatrième conduit 26 pour se déverser dans la chambre primaire 16 jusqu'à ce qu'au moins un niveau de pression seuil à l'intérieur de la chambre primaire 16 soit atteint. Dans un exemple, un niveau de pression seuil est de 3.10⁵ Pa. Ce niveau de pression seuil correspond à une position de pré-freinage des garnitures de frein par rapport à leur surface de frottement. Cette position de pré-freinage correspond à un positionnement donné des garnitures de frein par rapport à leur surface de frottement depuis une position de repos de ces mêmes garnitures de frein, cette position donnée étant telle que la garniture de frein ne touche pas cette même surface de frottement.

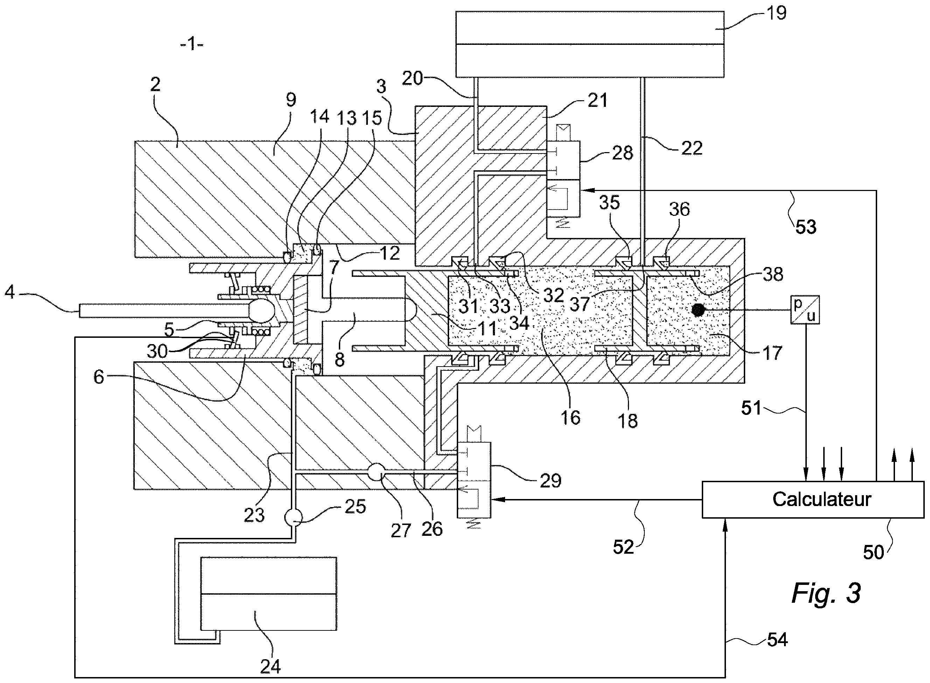

Puis, figure 3, le fluide se déverse ensuite dans la chambre de poussée 13 dont le volume augmente au fur et à mesure que le conducteur appuie sur la pédale de frein. Le piston primaire 11 est alors déplacé en direction du circuit hydraulique primaire de freinage. La pression à l'intérieur de la chambre primaire 16 étant déjà élevée, il s'ensuit un freinage du véhicule.

Selon un deuxième mode de réalisation de l'invention, en position de repos, moteur éteint, figure 1, les deux vannes 28 et 29 sont ouvertes. En position de repos, moteur allumé figure 2, la première vanne 28 se ferme et le fluide est injecté dans la chambre primaire 16 via le deuxième réservoir 24 jusqu'à atteindre une pression seuil. Puis figure 3, le fluide est alors transféré dans la chambre de poussée 13.

Après le freinage, le fluide contenu dans la chambre primaire 16 et dans la chambre de poussée 13 retourne dans le deuxième réservoir 24. La première pompe 25 et la deuxième pompe 27 peuvent être prévues afin de faciliter ce retour de fluide. La deuxième pompe 27 peut être commandée pour retirer une quantité prédéterminée de fluide. Cette quantité de fluide prédéterminée est telle qu'elle ne doit pas engendrer de dépression dans la chambre primaire 16, dans les conduits du circuit hydraulique primaire et dans la chambre de poussée 13. Le fluide restant doit être à la pression atmosphérique.

Le maître cylindre comporte une première coupelle d'étanchéité 31 et une deuxième coupelle d'étanchéité 32. La première coupelle d'étanchéité 31 est placée, depuis la pédale de frein vers le circuit hydraulique primaire de freinage, en amont d'un orifice de sortie 33 du premier conduit 20 dans la chambre primaire 16. La deuxième coupelle d'étanchéité 32 est située, depuis la pédale de frein vers le circuit hydraulique primaire de freinage, en aval de ce même orifice de sortie 33 du premier conduit 20. Cette deuxième coupelle d'étanchéité 32 est également située en aval d'un orifice 34 formé au travers du corps du piston primaire 11 au travers duquel peut s'écouler le fluide hydraulique provenant du premier réservoir 19. A travers cet orifice 34, le fluide peut s'écouler depuis le premier conduit 20 vers la chambre primaire 16. Chacune des coupelles d'étanchéité 31 et 32 forme une coupelle élastique circulaire disposée dans une gorge formée par le corps 21 du maître cylindre 3. Chacune de ces coupelles forme une lèvre interne flexible placée en appui contre le corps du piston primaire 11 et une lèvre externe placée en appui contre un fond de la gorge du corps 21 du maître cylindre 3.

L'emplacement de l'orifice 34 sur le corps du piston primaire 11 est réalisé de telle manière que lorsque le piston primaire 11 est entraîné en déplacement en direction du circuit hydraulique primaire de freinage, la deuxième coupelle d'étanchéité 32 est placée en amont de cet orifice 34 obturant alors le passage du fluide provenant du premier réservoir 19. La chambre primaire 16 devient étanche. La pression à l'intérieur de la chambre primaire 16 peut alors s'élever.

De la même manière que pour le piston primaire 11, le piston secondaire 18 comporte également une première coupelle d'étanchéité 35 et une deuxième coupelle d'étanchéité 36 entre lesquelles est situé en position de repos un orifice de sortie 37 du deuxième conduit 22 et un orifice 38 formé par le corps du piston secondaire 18. L'orifice de sortie 37 et l'orifice 38 sont situés selon les mêmes dispositions que les orifices 33 et 34 précédemment décrits.

Ainsi, même si la première vanne 28 est défectueuse, c'est-à-dire qu'elle reste ouverte malgré un ordre de fermeture, le freinage du véhicule peut avoir lieu. Les coupelles d'étanchéité autorisant une augmentation de la pression à l'intérieur des chambres du maître cylindre permettant d'entraîner le freinage du véhicule, même si c'est de manière moins efficace.

Dans les exemples illustrés sur les figures 1 à 3, un calculateur numérique 50, avantageusement un calculateur sur un bus dit « CAN » dans l'industrie automobile reçoit un signal 51 d'un capteur de pression régnant dans le maître cylindre et un signal 54 de la position de la pédale du capteur 30 et/ou un signal de position relative ??? tige de commande 41 palpeur 6 et émet des commandes 52 respectivement 53 d'ouverture et/ou de fermeture des vannes 29 respectivement 28.

## Revendications

1. Ensemble hydraulique de freinage (1) comportant
- un servomoteur d'assistance de freinage (2) comprenant un corps (9) et un piston palpeur (6), le piston palpeur coulissant dans un alésage (12) formé dans le corps et relié par une première extrémité à une pédale de frein, le piston palpeur délimitant avec l'alésage du corps une chambre de poussée (13),
- un maître-cylindre (3) comportant une chambre primaire (16) et un piston primaire (11), la chambre primaire étant reliée intérieurement à un circuit hydraulique de freinage, le piston primaire étant relié à une deuxième extrémité du piston palpeur opposée à sa première extrémité,
- un premier réservoir (19) de fluide hydraulique alimentant la chambre primaire (16) via un premier conduit (20),
- un fluide hydraulique alimentant la chambre de poussée étanche (13) via un troisième conduit (23) et au moyen d'une pompe hydraulique (25, 27),
**caractérisé en ce qu'**il comporte
- un quatrième conduit (26) recevant du fluide hydraulique et débouchant dans la chambre primaire (16) du maître-cylindre, et
- la pompe hydraulique (25, 27) étant en relation avec le quatrième conduit (26), le remplissage en fluide dans la chambre primaire (16) via le quatrième conduit (26) étant commandé par un capteur (30) qui active la pompe au moment d'un appui sur la pédale de frein et préalablement au remplissage de la chambre de poussée (13) par le troisième conduit (23).

2. Ensemble selon la revendication 1,
**caractérisé en ce qu'**
il comporte un deuxième réservoir (24) de fluide hydraulique, le troisième conduit (23) et le quatrième conduit (26) naissant à partir de ce deuxième réservoir (24).

3. Ensemble selon la revendication 1,
**caractérisé en ce qu'**
il comporte un deuxième réservoir (24) de fluide hydraulique, le troisième conduit (23) naissant à partir de ce deuxième réservoir (24) et le quatrième conduit (26) naissant à partir du premier réservoir (19).

4. Ensemble selon la revendication 1,
**caractérisé en ce que**
le quatrième conduit (26) nait à partir du troisième conduit (23).

5. Ensemble selon l'une des revendications 1 à 4,
**caractérisé en ce qu'**
il comporte une première vanne (28) disposée sur le premier conduit (20) qui autorise une fermeture du premier conduit (20) dès la détection de l'appui sur la pédale de frein et dès le remplissage de la chambre primaire (16) via le quatrième conduit (26).

6. Ensemble selon l'une des revendications 1 à 5,
**caractérisé en ce qu'**
il comporte une deuxième vanne (29) disposée sur le quatrième conduit (26) contrôlant la quantité de fluide devant retourner par le quatrième conduit (26) au moment du retour en position de repos de la pédale de frein.

7. Ensemble selon l'une des revendications 5 à 6,
**caractérisé en ce que**
la première vanne (28) et la deuxième vanne (29) sont chacune une électrovanne.

8. Ensemble selon l'une des revendications 1 à 7,
**caractérisé en ce que**
le maître-cylindre (3) comporte à la suite de la chambre primaire (16), une chambre secondaire (17) et un piston secondaire (18), la chambre secondaire (17) étant reliée intérieurement à un deuxième circuit hydraulique de freinage et étant alimentée par le premier réservoir via un second conduit (22).

9. Procédé d'alimentation en fluide hydraulique d'un ensemble hydraulique de freinage selon l'une des revendications 1 à 8 lors d'un moment de freinage du véhicule, ledit procédé comportant les étapes suivantes :
- détection de l'appui sur une pédale de frein,
- remplissage de la chambre primaire (16) du maître-cylindre (3) en fluide hydraulique via le quatrième conduit (26), et simultanément fermeture du premier conduit (20).

10. Procédé d'alimentation en fluide hydraulique d'un ensemble hydraulique de freinage selon l'une des revendications 1 à 8 lors d'un moment de freinage du véhicule, comportant les étapes suivantes :
- mise en marche du véhicule,
- remplissage de la chambre primaire (16) du maître-cylindre (3) en fluide hydraulique via le quatrième conduit (26), et simultanément fermeture du premier conduit (20).

## Patentansprüche

1. Hydraulische Bremsanlage (1), aufweisend
- einen Servomotor zur Bremsunterstützung (2), welcher einen Körper (9) und einen Tastkolben (6) aufweist, wobei der Tastkolben in einer in dem Körper ausgebildeten Bohrung (12) gleitet und über ein erstes Ende mit einem Bremspedal verbunden ist, wobei der Tastkolben mit der Bohrung des Körpers eine Schubkammer (13) abgrenzt,
- einen Hauptzylinder (3), welcher eine primäre Kammer (16) und einen primären Kolben (11) aufweist, wobei die primäre Kammer im Inneren mit einem hydraulischen Bremskreis verbunden ist, wobei der primäre Kolben mit einem zweiten Ende des Tastkolbens, welches seinem ersten Ende gegenüber liegt, verbunden ist, wobei ein erster Tank (19) mit Hydraulikflüssigkeit die primäre Kammer (16) über eine erste Leitung (20) versorgt,
- wobei eine Hydraulikflüssigkeit die dichte Schubkammer (13) über eine dritte Leitung (23) und mittels einer Hydraulikpumpe (25, 27) versorgt,
**dadurch gekennzeichnet, dass** sie Folgendes aufweist:
- eine vierte Leitung (26), welche Hydraulikflüssigkeit aufnimmt und in die primäre Kammer (16) des Hauptzylinders mündet, und
- wobei die Hydraulikpumpe (25, 27) mit der vierten Leitung (26) in Beziehung steht, wobei das Auffüllen mit Flüssigkeit der primären Kammer (16) über die vierte Leitung (26) von einem Sensor (30) gesteuert wird, welcher die Pumpe im Moment einer Betätigung des Bremspedals und vor dem Auffüllen der Schubkammer (13) durch die dritte Leitung (23) aktiviert.

2. Anlage nach Anspruch 1, **dadurch gekennzeichnet, dass** sie einen zweiten Tank (24) mit Hydraulikflüssigkeit aufweist, wobei die dritte Leitung (23) und die vierte Leitung (26) von diesem zweiten Tank (24) stammen.

3. Anlage nach Anspruch 1, **dadurch gekennzeichnet, dass** sie einen zweiten Tank (24) mit Hydraulikflüssigkeit aufweist, wobei die dritte Leitung (23) von diesem zweiten Tank (24) stammt und die vierte Leitung (26) von dem ersten Tank (19) stammt.

4. Anlage nach Anspruch 1, **dadurch gekennzeichnet, dass** die vierte Leitung (26) von der dritten Leitung (23) stammt.

5. Anlage nach einem, der Ansprüche 1 bis 4, **dadurch gekennzeichnet, dass** sie ein erstes, in der ersten Leitung (20) angeordnetes Ventil (28) aufweist, welches ein Schließen der ersten Leitung (20) bei der Erfassung der Betätigung des Bremspedals und beim Auffüllen der primären Kammer (16) über die vierte Leitung (26) zulässt.

6. Anlage nach einem der Ansprüche 1 bis 5, **dadurch gekennzeichnet, dass** sie ein zweites, in der vierten Leitung (26) angeordnetes Ventil (29) aufweist, welches die Menge an Flüssigkeit steuert, bevor sie über die vierte Leitung (26) im Moment der Rückkehr des Bremspedals in die Ruheposition umkehrt.

7. Anlage nach einem der Ansprüche 5 bis 6, **dadurch gekennzeichnet, dass** das erste Ventil (28) und das zweite Ventil (29) jeweils ein Elektroventil sind.

8. Anlage nach einem der Ansprüche 1 bis 7, **dadurch gekennzeichnet, dass** der Hauptzylinder (3) im Anschluss an die primäre Kammer (16) eine sekundäre Kammer (17) und einen sekundären Kolben (18) aufweist, wobei die sekundäre Kammer (17) im Inneren mit einem zweiten hydraulischen Bremskreis verbunden ist und von dem ersten Tank über eine zweite Leitung (22) versorgt wird.

9. Verfahren zur Versorgung einer hydraulischen Bremsanlage nach einem der Ansprüche 1 bis 8 mit Hydraulikflüssigkeit in einem Moment einer Bremsung des Fahrzeugs, wobei das Verfahren die folgenden Schritte aufweist:
- Erfassen der Betätigung eines Bremspedals,
- Füllen der primären Kammer (16) des Hauptzylinders (3) mit Hydraulikflüssigkeit über die vierte Leitung (26) und gleichzeitiges Schließen der ersten Leitung (20).

10. Verfahren zur Versorgung einer hydraulischen Bremsanlage nach einem der Ansprüche 1 bis 8 mit Hydraulikflüssigkeit in einem Moment einer Bremsung des Fahrzeugs, welches die folgenden Schritte aufweist:
- in Betrieb nehmen des Fahrzeugs,
- Füllen der primären Kammer (16) des Hauptzylinders (3) mit Hydraulikflüssigkeit über die vierte Leitung (26) und gleichzeitiges Schließen der ersten Leitung (20).

## Claims

1. Hydraulic brake unit (1) comprising
- a brake booster (2) comprising a body (9) and a feeler piston (6), the feeler piston sliding in a bore (12) formed in the body and connected by a first end to a brake pedal, the feeler piston delimiting a thrust chamber (13) with the bore of the body,
- a master cylinder (3) comprising a primary chamber (16) and a primary piston (11), the primary chamber being connected internally to a hydraulic brake circuit, the primary piston being connected to a second end of the feeler piston that is opposite to its first end,
- a first hydraulic fluid reservoir (19) supplying the primary chamber (16) via a first duct (20),
- a hydraulic fluid supplying the sealed thrust chamber (13) via a third duct (23) and by means of a hydraulic pump (25, 27),
**characterized in that** it comprises
- a fourth duct (26) receiving hydraulic fluid and opening into the primary chamber (16) of the master cylinder, and
- the hydraulic pump (25, 27) being connected to the fourth duct (26), the filling of fluid into the primary chamber (16) via the fourth duct (26) being controlled by a sensor (30) which activates the pump at the moment of a press on the brake pedal and prior to the filling of the thrust chamber (13) via the third duct (23).

2. Unit according to Claim 1,
**characterized in that**
it comprises a second hydraulic fluid reservoir (24), the third duct (23) and the fourth duct (26) emanating from this second reservoir (24).

3. Unit according to Claim 1,
**characterized in that**
it comprises a second hydraulic fluid reservoir (24), the third duct (23) emanating from this second reservoir (24) and the fourth duct (26) emanating from the first reservoir (19).

4. Unit according to Claim 1,
**characterized in that**
the fourth duct (26) emanates from the third duct (23).

5. Unit according to one of Claims 1 to 4,
**characterized in that**
it comprises a first valve (28) arranged on the first duct (20) that allows the first duct (20) to be closed as soon as a press on the brake pedal is detected and as soon as the primary chamber (16) is filled via the fourth duct (26).

6. Unit according to one of Claims 1 to 5,
**characterized in that**
it comprises a second valve (29) arranged on the fourth duct (26) that controls the quantity of fluid which is to return via the fourth duct (26) at the moment the brake pedal returns to the rest position.

7. Unit according to either of Claims 5 and 6,
**characterized in that**
the first valve (28) and the second valve (29) are each an electrically operated valve.

8. Unit according to one of Claims 1 to 7,
**characterized in that**
the master cylinder (3) comprises, subsequent to the primary chamber (16), a secondary chamber (17) and a secondary piston (18), the secondary chamber (17) being connected internally to a second hydraulic brake circuit and being supplied by the first reservoir via a second duct (22).

9. Method for supplying hydraulic fluid to a hydraulic brake unit according to one of Claims 1 to 8 during a braking moment of the vehicle, the said method comprising the following steps:
- detecting a press on a brake pedal,
- filling the primary chamber (16) of the master cylinder (3) with hydraulic fluid via the fourth duct (26), and simultaneously closing the first duct (20).

10. Method for supplying hydraulic fluid to a hydraulic brake unit according to one of Claims 1 to 8 during a braking moment of the vehicle, comprising the following steps:
- starting the vehicle,
- filling the primary chamber (16) of the master cylinder (3) with hydraulic fluid via the fourth duct (26), and simultaneously closing the first duct (20).
